# EUROPÄISCHE PATENTSCHRIFT

(11) **EP 0 474 199 B1**
(45) Veröffentlichungstag und Bekanntmachung des Hinweises auf die Patenterteilung: **18.11.1993**
(21) Anmeldenummer: 91114862.5
(22) Anmeldetag: 03.09.1991
(51) Int. Cl.: B65G 39/073, F25D 13/06

(54) **Tragrolle für ein Zug- und/oder Tragorgan**
Support roller for traction and/or support means
Rouleau porteur pour organe tractif et/ou portant

(30) Priorität: 03.09.1990 DE 4027910
(43) Veröffentlichungstag der Anmeldung: 11.03.1992
(73) Patentinhaber: Linde Aktiengesellschaft, 65189 Wiesbaden (DE)
(72) Erfinder: Schmidtke, Wolfgang, W-8000 München 60 (DE)
(74) Vertreter: Schaefer, Gerhard, Dr.

(56) Entgegenhaltungen:
- DE-C- 825 526
- DE-C- 1 145 092
- DE-U- 1 794 177
- FR-A- 2 152 448
- US-A- 2 982 029

## Beschreibung

Die Erfindung betrifft eine Tragrolle für ein Zug- und/oder Tragorgan, wie sie beispielsweise für Umlenk- und Stützrollen von Förderbändern oder Bandantrieben Verwendung finden.

Die üblicherweise benutzten Tragrollen bestehen aus einem beidseitig gelagerten Voll- oder Hohlzylinder und unterstützen das Band auf annähernd der vollständigen Axialerstreckung der Tragrolle. Für spezielle Anwendungsfälle, nämlich solche, bei denen die Tragrolle für ein Förderband vorgesehen ist und aufgrund des zu befördernden Gutes kleine Teilchen zwischen Förderband und Tragrolle gelangen können, ist es bekannt, anstelle eines durchgehenden Zylinders einzelne Scheiben gleichen Außendurchmessers vorzusehen, die voneinander beabstandet sind und auf denen das Förderband aufliegt (siehe zum Beispiel US-A-2 982 029.). Auf diese Weise entstehen Nuten, zwischen denen ein Großteil der kleinen Teile hindurchfallen kann. Dadurch soll eine "Selbstreinigung" der Tragrolle erreicht und ein "Aufreiten" des Förderbandes infolge eingeklemmter kleiner Teile verhindert werden. An solchen Tragrollen ist nachteilig, daß sich infolge der ungleichmäßigen Belastung des Förderbandes mit zunehmender Laufzeit auf dem Förderband umlaufende Mulden im Bereich zwischen den Scheiben bilden, was die Abrolleigenschaften des Förderbandes verschlechtert. Ein weiterer Nachteil tritt dann ein, wenn das zu fördernde Gut sehr fest auf dem Förderband haftet. In diesem Fall ist es nämlich üblich, Abstreifvorrichtungen einzusetzen, um das Fördergut zu entfernen. Dies wird bei einem Aufreiten des Förderbandes infolge eingeklemmter Teile und bei einer Muldenbildung im Förderband erheblich erschwert.

Der vorliegenden Erfindung liegt die Aufgabe zugrunde, eine Tragrolle der eingangs genannten Art zur Verfügung zu stellen, die gute Abrolleigenschaften von Antriebs- und Förderbändern und eine weitgehende Selbstreinigung der Tragrolle ermöglicht.

Diese Aufgabe wird erfindungsgemäß dadurch gelöst, daß die Tragrolle eine Mehrzahl von nebeneinander mit Abstand angeordneten zylindrischen Tragkörpern aufweist, die jeweils auf der Außenumfangsfläche mit einer Mehrzahl von parallel zur Umfangsrichtung der Tragrolle verlaufenden Ringnuten versehen sind und deren beide Stirnseiten schräg zur Tragkörper-Mittelachse angeordnet sind.

Im Gegensatz zu einer durchgehenden Tragrolle, die auf der ganzen Breite trägt und eine einzige lineare Abrollbahn erzeugt, die im wesentlichen der Breite der Tragrolle entspricht, entstehen durch die erfindungsgemäße Tragrolle mehrere nebeneinander liegende Abrollbahnen, wobei durch die schräg abgeschnittenen Stirnseiten der Tragkörper diese im Randbereich nicht ständig das Antriebs- bzw. Förderband unterstützen, so daß die Abrollbahnen wellenförmig verlaufen. Auf diese Weise wird in Verbindung mit den Ringnuten, deren Breite so auf das Material des Antriebs- bzw. Förderbandes abgestimmt ist, daß keine Mulden entstehen, was im übrigen auch für den Abstand zwischen den einzelnen Tragkörpern gilt, eine Selbstreinigung der Tragrolle ermöglicht. Der Selbstreinigungseffekt wird verstärkt, wenn die Stirnseiten der Tragkörper derart schräg sind, daß zumindest die Ringnuten in den Randbereichen eines Tragkörpers von den Strinseiten angeschnitten werden.

Gemäß einer vorteilhaften Weiterbildung der Erfindung wird vorgeschlagen, daß beide Stirnseiten der Tragkörper gleichsinnig schräg und parallel zueinander angeordnet sind.

Dadurch lassen sich die Tragkörper fertigungstechnisch auf einfachste Weise herstellen, nämlich in dem eine mit Ringnuten versehene Welle in gleich große Stücke bei schräger Schnittführung auf geeignete Weise zertrennt wird.

Es hat sich in Versuchen herausgestellt, daß die genannten Vorteile in besonders großem Maße erreicht werden, wenn die Stirnseiten der Tragkörper in einem Winkel von annähernd 30 ° zur Senkrechten auf die Tragkörper-Mittelachse hin abgeschnitten sind. Es ergibt sich dann ein sinusförmiger Verlauf der einzelnen Abrollbahnen.

Durch parallele Anordnung der Abrollbahnen, wobei gemäß einer zweckmäßigen Weiterbildung des Erfindungsgegenstandes die Tragkörper mit gleichsinnig zueinander ausgerichteten Stirnseiten auf der Welle angeordnet sind, ergibt sich eine gleichmäßige Belastung des Antriebs- bzw. Förderbandes.

Besonders vorteilhaft ist die Anwendung der erfindungsgemäßen Tragrolle auf eine Umlenkrolle eines als Drahtgeflechtgurt ausgebildeten Förderbandes einer Gefrieranlage.

Bei einer Gefrieranlage, beispielsweise einem mit CO₂ oder N₂ betriebenen Gefriertunnel, bilden sich Eiskristalle, die aufklumpen und sich zwischen Förderband und Tragrolle festsetzen können, was zu den bereits erwähnten Nachteilen führt, insbesondere zu einer mangelhaften Fördergutablösung, weil der hierfür vorgesehene Messerablöser nicht richtig auf dem Förderband aufliegt, sofern nicht die erfindungsgemäße Tragrolle eingesetzt wird. Die von der erfindungsgemäßen Tragrolle bewirkte wechselnde Abrollbahn und Stützung des Förderbandes verbessert die Abrolleigenschaft des Förderbandes und die Produktablösung erheblich.

Die erfindungsgemäße Tragrolle kann sowohl als angetriebene als auch als nicht angetriebene Umlenkrolle benutzt werden. Im letztgenannten Fall, einer sogenannten Losrollenumlenkung, wird gegenüber einer aus einzelnen scheibenförmigen Tragkörpern aufgebauten Tragrolle, bei der das Förderband auf den Scheiben bei schwergängigen Tragrollen-Lagern leicht durchrutschen kann, der Kraftschluß verbessert, weil die Form der Abrollbahnen wie ein Laufprofil wirkt.

Der Einsatzbereich der erfindungsgemäß gestalteten Tragrolle ist nicht auf Linearbänder beschränkt, sondern erstreckt sich auch auf Kurvenbänder, wie sie z.B. in sogenannten Wendelbandfrostern oder Spiralbandfrostern vorkommen. Darüber hinaus ist auch die Verwendung in Riementrieben möglich und im höheren Drehzahlbereich in Schwingrollensystemen, wobei dann die bei höheren Drehzahlen auftretende Unwucht der Tragkörper vorteilhaft genutzt werden kann.

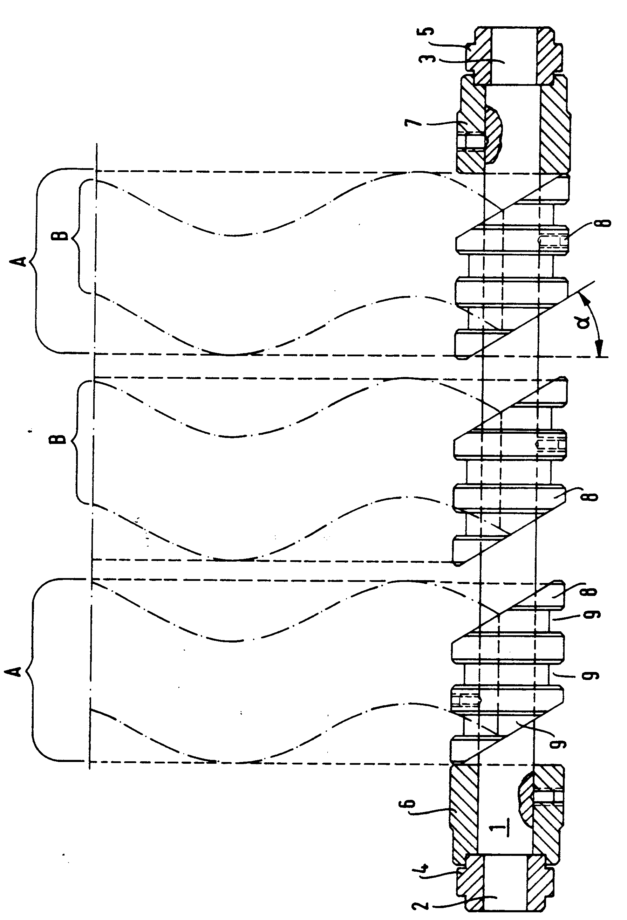

Weitere Einzelheiten und Vorteile der Erfindung werden anhand des in der Figur schematisch dargestellten Ausführungsbeispieles näher beschrieben.

In der Figur ist eine erfindungsgemäße Tragrolle in Losrollenanordnung dargestellt, die in diesem Beispiel für ein Förderband vorgesehen ist. Die Tragrolle weist eine Welle 1 auf, die an Wellenendzapfen 2 und 3 in Buchsen 4 und 5 gelagert ist. Der Buchse 4 bzw. 5 benachbart ist jeweils eine auf der Welle 1 beispielsweise durch eine Schraube befestigte Hülse 6 bzw. 7, auf der ein in der Figur nicht dargestelltes Förderband aufliegt und gegen seitliches Verrutschen gesichert ist. Das Förderband liegt weiterhin auf mehreren, zwischen den Hülsen 6 und 7 mit Abstand voneinander auf der Welle 1 befestigten (beispielsweise verschraubten), zylindrischen Tragkörpern 8 auf. Die Tragkörper 8 sind auf der Außenumfangsfläche mit Ringnuten 9 versehen. Die Breite der Ringnuten 9 und der Abstand der Tragkörper 8 voneinander ist annähernd gleich. Das Material des Förderbands ist dahingehend auf die Breite der Ringnuten 9 abgestimmt, daß eine Muldenbildung vermieden wird. Bei einem Traggeflecht-Förderband wird dies durch entsprechende Wahl der Maschengröße und Maschenverflechtung erreicht. Wenn die Tragkörper 8 als vollständige Zylinder ausgebildet wären, ergäben sich die gestrichelt dargestellten Abrollbahnen A. Weil aber die beiden Stirnseiten jeder Tragrolle 8 um den gleichen Winkelbetrag ₐ, nämlich vorzugsweise 30 ° zur Senkrechten auf die Tragkörper-Mittelachse hin schräg abgeschnitten sind und weil die Tragkörper 8 mit gleichsinnig zueinander ausgerichteten Stirnseiten auf der Welle angeordnet sind, ergeben sich parallele sinusförmige Abrollbahnen B (strichpunktiert dargestellt), so daß das Förderband in wechselnden Zonen gestützt wird. Die Bandführung ist seitenschubfrei. Zusammen mit den Ringnuten 9 und dem Schräganschnitt der randseitigen Ringnuten 9 ergibt sich eine gute Selbstreinigung der Tragrolle, da sich kaum Teile, beispielsweise Eiskristalle, bei einem Einsatz in einer Gefrieranlage, zwischen Förderband und Tragkörper drücken können.

## Patentansprüche

1. Tragrolle für ein Zug- und/oder Tragorgan, dadurch gekennzeichnet, daß die Tragrolle eine Mehrzahl von nebeneinander mit Abstand angeordneten, zylindrischen Tragkörpern (8) aufweist, die jeweils auf der Außenumfangsfläche mit einer Mehrzahl von parallel zur Umfangsrichtung der Tragrolle verlaufenden Ringnuten (9) versehen sind und deren beide Stirnseiten schräg zur Tragkörper-Mittelachse angeordnet sind.

2. Tragrolle nach Anspruch 1, dadurch gekennzeichnet, daß beide Stirnseiten der Tragkörper (8) gleichsinnig schräg und parallel zueinander angeordnet sind.

3. Tragrolle nach Anspruch 1 oder 2, dadurch gekennzeichnet, daß die Stirnseiten der Tragkörper (8) in einem Winkel von annähernd 30 ° zur Senkrechten auf die Tragkörper-Mittelachse hin abgeschnitten sind.

4. Tragrolle nach einem der vorangegangenen Ansprüche, dadurch gekennzeichnet, daß die Tragkörper (8) mit gleichsinnig zueinander ausgerichteten Stirnseiten auf der Welle (1) angeordnet sind.

5. Anwendung einer Tragrolle nach einem der vorangegangenen Ansprüche auf eine Umlenkrolle eines als Drahtgeflechtgurt ausgebildeten Förderbandes einer Gefrieranlage.

## Claims

1. A bearing roller for a traction- and/or bearing element, characterised in that the bearing roller comprises a plurality of cylindrical bearing bodies (8), which are arranged with spacing one beside another and which are each provided on their outer peripheral surface with a plurality of annular grooves (9) extending in parallel to the peripheral direction of the bearing roller, and the two end sides of which are disposed obliquely to the central axis of the carrier bodies.

2. A bearing roller as claimed in Claim 1, characterised in that the two end sides of the bearing bodies (8) are inclined in the same sense and arranged in parallel to one another.

3. A bearing roller as claimed in Claim 1 or 2, characterised in that the end sides of the bearing bodies (8) are cut off at an angle of approximately 30 to the perpendicular to the central axis of the bearing bodies.

4. A bearing roller as claimed in one of the preceding claims, characterised in that the bearing bodies (8) are arranged on the shaft (1) with their end sides aligned in the same direction to one another.

5. Application of the bearing roller according to one of the preceding claims to a guide roller of a conveyor belt, in the form of a wire mesh belt, of a freezing plant.

## Revendications

1. Rouleau porteur pour un organe tracteur ou porteur, caractérisé en ce que le rouleau porteur comporte une pluralité de corps porteurs (8) cylindriques, disposés côte-à-côte et espacés, qui sont chacun munis sur leur surface périphérique extérieure d'une pluralité de gorges annulaires (9) s'étendant parallèlement à la direction de la périphérie du rouleau porteur et dont les deux faces frontales sont inclinées par rapport à l'axe médian des corps porteurs.

2. Rouleau porteur selon la revendication 1, caractérisé en ce que les deux faces frontales des corps porteurs (8) sont inclinées dans le même sens et sont parallèles l'une à l'autre.

3. Rouleau porteur selon la revendication 1 ou 2, caractérisé en ce que les faces frontales des corps porteurs (8) sont taillées selon un angle d'environ 30° par rapport aux perpendiculaires à l'axe médian des corps porteurs.

4. Rouleau porteur selon l'une des revendications précédentes, caractérisé en ce que les corps porteurs (8) sont montés sur l'arbre (1) avec leurs faces frontales toutes orientées dans le même sens.

5. Application d'un rouleau porteur selon l'une des revendications précédentes à un rouleau de renvoi d'un convoyeur à bande d'une installation frigorifique et dont la courroie est constituée d'un treillis en fil métallique.
